# EUROPÄISCHE PATENTANMELDUNG

(11) **EP 1 176 682 A1**
(43) Veröffentlichungstag der Anmeldung: **30.01.2002**
(21) Anmeldenummer: 00810657.7
(22) Anmeldetag: 24.07.2000
(51) Int. Cl.: H02B 5/00

(54) **Doppelsammelschienen-Anordnung in Freiluftausführung**

(71) Anmelder: ABB Hochspannungstechnik AG, 8050 Zürich (CH)
(72) Erfinder: Büecheler, Werner, El.-Ing.TS, 5316 Leuggern (CH)
(74) Vertreter: ABB Patent Attorneys

(57) **Zusammenfassung**

Die Doppelsammelschienen-Anordnung ist Teil einer Schaltanlage in Freiluftausführung. Sie weist zwei mehrphasige Sammelschienen (I, II) auf sowie zwei Portale (1, 2), an denen die Phasenleiter (I_{R}, I_{S}, l_{T,}, II_{R}, II_{S}, II_{T}) der beiden Sammelschienen (I, II) abgespannt sind. Die Phasenleiter sind übereinander und symmetrisch zu einer in Abspannrichtung ausgerichteten vertikalen Ebene (E) angeordnet. Zwischen den beiden Sammelschienen (I, II) ist ein Seilwerk vorgesehen, welches Teile von Stromverbindungen (7) zu Schaltfeldern der Anlage enthält.

Mit dem Seilwerk werden Seilschwingungen der Phasenleiter weitgehend unterdrückt, so dass sich die Doppelsammelschienen-Anordnung durch grosse mechanische Stabiltät auszeichnet. Da die Phasenleiter übereinander angeordnet sind, beansprucht diese Doppelsammelschienen-Anordnung zugleich wenig Platz. Durch dachartige Anordnung der Phasenleiter kann zudem eine homogene Verteilung des elektrischen Feldes in der Anordnung erreicht werden, wodurch die Anordnung besonders wirksam gegen Blitzeinschlag geschützt ist und Verluste durch Koronaentladungen stark reduziert werden.

## Beschreibung

### TECHNISCHES GEBIET

Bei der Erfindung wird ausgegangen von einer Doppelsammelschienen-Anordnung in Freiluftausführung nach dem Oberbegriff von Patentanspruch 1.

### STAND DER TECHNIK

Mit dem Oberbegriff des Patentanspruchs 1 nimmt die Erfindung auf einen Stand der Technik von Doppelsammelschienen-Anordnungen in Freiluftausführung Bezug, wie er etwa im Taschenbuch für Schaltanlagen, herausgegeben von der Brown, Boveri & Cie Aktiengesellschaft, Mannheim, im Verlag W.Girardet, Essen, 7. Auflage von 1979, insbesondere Seiten 396 und 397, beschrieben ist. Die beschriebenen Doppelsammelschienen-Anordnungen weisen jeweils zwei dreiphasige Sammelschienen und Doppelportale auf, an deren Kopfteilen die Phasenleiter der beiden Sammelschienen abgespannt sind. Abgesehen vom nicht zu vermeidenden Durchhang sind die Phasenleiter der beiden Sammelschienen weitgehend horizontal angeordnet. In Abspannrichtung sind sie zueinander parallel geführt. Unter den Sammelschienen sind Trennschalter und neben der Doppelsammelschienen-Anordnungen sind Komponenten von Schaltfeldern angeordnet, die an die Sammelschienen angeschlossen werden können. Diese Doppelsammelschienen-Anordnungen zeichnen sich durch gute Begehbarkeit aus. Insbesondere bei hohen Anlagenspannungen beanspruchen sie jedoch quer zur Abspannrichtung relativ viel Raum. Darüber hinaus benötigen sie verhältnismässig breite Doppelportale.

### DARSTELLUNG DER ERFINDUNG

Die Erfindung, wie sie in den Patentansprüchen definiert ist, löst die Aufgabe, eine Doppelsammenschienen-Anordnung der eingangs genannten Art anzugeben, welche sich bei guter Zugänglichkeit durch einen geringen Platzbedarf und eine grosse mechanische Stabilität auszeichnet.

Bei der Doppelsammenschienen-Anordnung nach der Erfindung sind die Phasenleiter der beiden Sammelschienen übereinander und symmetrisch zu einer in Abspannrichtung geführten vertikalen Ebene angeordnet. Zudem ist zwischen den beiden Sammelschienen ein die Phasenleiter mechanisch stabilisierendes und Stromanschlüsse der Phasenleiter enthaltendes Seilwerk vorgesehen. Hierdurch wird unter Beibehalt guter Begehbarkeit eine Doppelsammelschienen-Anordnung mit geringem Platzbedarf und mit grosser mechanischer Stabilität erreicht. Die Doppelsammelschienen-Anordnung kann mit beliebig ausgebildeten Schaltfeldern der Schaltanlage, vorzugsweise in Freiluftausführung oder in gekapselter gasisolierter Ausführung, verbunden werden. Der geringe Platzbedarf wirkt sich jedoch besonders vorteilhaft aus, wenn in den Schaltfeldern anstelle von raumbeanspruchenden Freiluftkomponenten, wie Schaltern und Messwandlern, raumsparend ausgebildete, gekapselte gasisolierte Komponenten verwendet werden. Diese Komponenten können in der Doppelsammelschienen-Anordnung problemlos im Sammelschienenraum angeordnet werden. Der sonst für die Freiluftkomponenten ausserhalb des Sammelschienenraums in den Schaltfeldern benötigte Platz wird so zusätzlich eingespart. Darüber hinaus schirmen die Sammelschienen und das Seilwerk diese Komponenten gegenüber Fremdeinflüssen, wie Blitzschlag, Kurzschlüssen oder transienten Vorgängen, ab.

Mit Vorteil enthält das Seilwerk eine überwiegend in der vertikalen Ebene geführte und auf Erdpotential gelegte Seilverspannung sowie quer zur Ebene verlaufende Halteseile, welche jeweils mit einem ihrer beiden Enden elektrisch leitend mit einem der Phasenleiter verbunden sind und mit ihrem anderen Ende gegenüber dem Phasenleiter elektrisch isoliert an der geerdeten Seilverspannung befestigt sind. Es werden so die Amplituden von Seilschwingungen der Phasenleiter begrenzt, die beim Betrieb der Anlage auftreten. Zugleich sind die beiden Sammelschienen durch die geerdete Seilverspannung in besonders hohem Masse vor dem Auftreten von Überschlägen gesichert, wie sie in Ausnahmefällen im Betrieb der Doppelsammelschienen-Anordnung auftreten können, etwa durch Blitzeinschläge oder mutwillige Handlungen.

Mit einfachen Mitteln eine hohe mechanische Stabilität und eine sichere Erdungsstelle zwischen den beiden Sammelschienen wird erreicht, wenn die Seilverspannung mindestens zwei überwiegend vertikal ausgerichtete und von Kopfteilen der Portale auf Erde geführte Spannseile aufweist sowie mehrere, der Anzahl der Phasen entsprechende und überwiegend horizontal geführte Führungsseile, deren Enden an den beiden vertikalen Spannseilen befestigt sind. An den Führungsseilen sind ferner Halteseile abgespannt, welche quer zur Ebene an die Phasenleiter geführt und gegenüber den Führungsseilen elektrisch isoliert mit den Phasenleitern verbunden sind.

Wird in jedes der beiden Spannseile jeweils ein Dämpfungselement eingebaut, so können von den abgespannten Phasenleitern der Sammelschienen in das Seilwerk eingeleitete Seilschwingungen wirksam unterdrückt werden.

Durch Anordnung der Phasenleiter nach Art eines Daches wird eine gerundete und daher günstige Feldverteilung in der Doppelsammelschienen-Anordnung erreicht. Dies verbessert das dielektrische Verhalten der Anordnung, wodurch die Anlage gegenüber Blitzeinwirkungen besonders gut geschützt ist und ein verbessertes Verhalten gegenüber Koronaentladungen erreicht wird.

Eine für die meisten Anwendungen ausreichend hohe mechanische Festigkeit bei kleinem Materialaufwand weist die Doppelsammelschienen-Anordnung bereits dann auf, wenn mindestens eines der Portale als bogenförmig gekrümmter oder als fünfeckiger Rahmen ausgebildet ist. Besonders hohe Stabilität der Anordnung bei sehr geringem Materialaufwand wird jedoch mit einem sechseckig ausgeführten Portal erreicht.

### KURZE BESCHREIBUNG DER ZEICHNUNGEN

Die Erfindung wird nachstehend anhand von Ausführungsbeispielen erläutert. Es zeigt:
- Fig. 1: eine Aufsicht auf eine Ausführungsform der Doppelsammelschienen-Anordnung nach der Erfindung,
- Fig. 2: eine Seitenansicht der Doppelsammelschienen-Anordnung gemäss Fig. 1 von links, und
- Fig.3: eine Seitenansicht der Doppelsammelschienen-Anordnung gemäss Fig.1 von vorne.

### WEGE ZUR AUSFÜHRUNG DER ERFINDUNG

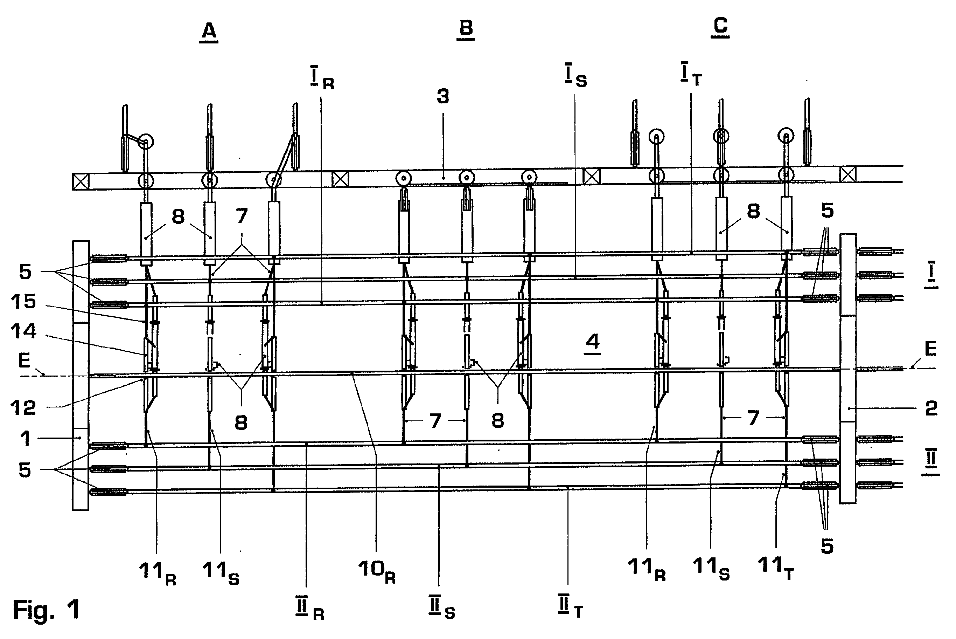

In den Figuren sind gleiche Teile mit gleichen Bezugszeichen gekennzeichnet. Aus der Aufsicht nach Fig. 1 sind drei Portale 1, 2, 3 einer Schaltanlage in Freiluftausführung zu erkennen. Die quer und mit Abstand zum Portal 3 angeordneten Portale 1 und 2 sind Teil einer Doppelsammelschienen-Anordnung und dienen dem Abspannen von Abschnitten zweier Sammelschienen I und II dieser Anordnung. Das Portal 3 dient dem Abspannen von nicht bezeichneten Freileitungen, die von Schaltfeldern A, B und C der Schaltanlage abgehen.

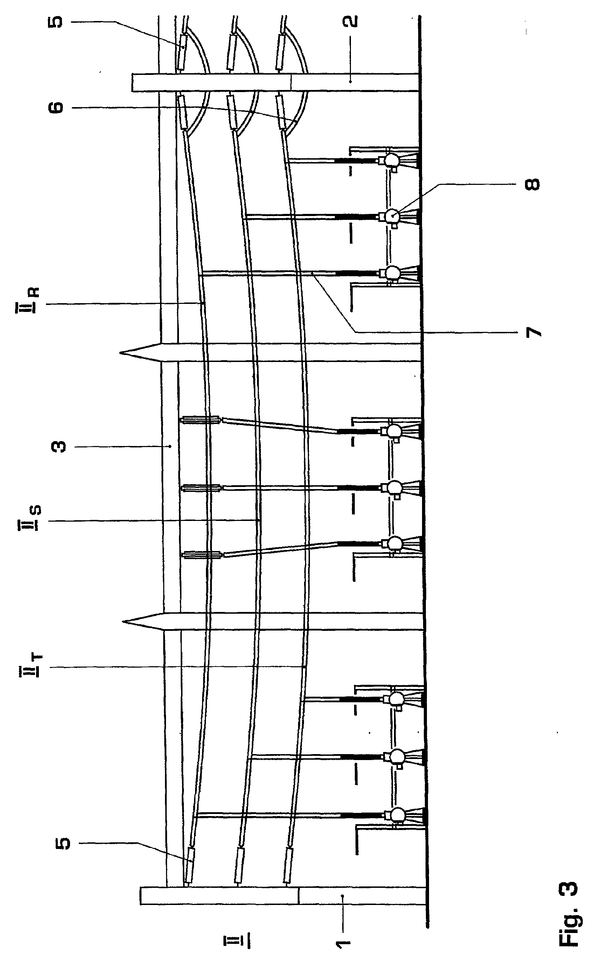

Die Sammelschienen I und II befinden sich auf Hochspannungspotential, beispielsweise von 400 kV, und weisen jeweils Phasenleiter I_{R}, I_{S}, I_{T} und II_{R}, II_{S}, II_{T} für Mehrphasenstrom mit Phasen R, S und T auf. Die Phasenleiter sind mit Isolator-Ketten 5 an den Portalen 1 und 2 abgespannt. Die elektrische Verbindung zu weiteren Sammelschienenabschnitten ist durch flexible Seilverbindungen 6 sichergestellt, die aus Fig.3 ersichtlich sind. Flexible Seilverbindungen 7 bewirken die Stromverbindung von den Phasenleitern zu Schalt-, Schutz- und Messgeräten 8 der Schaltfelder A, B und C.

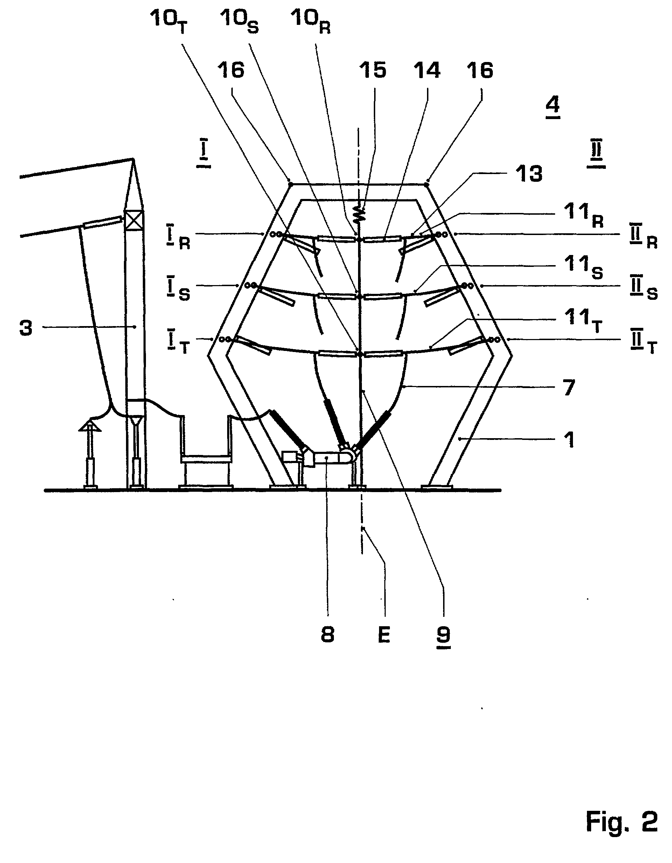

Wie aus den Figuren 2 und 3 ersichtlich ist, sind die Phasenleiter jeder Sammelschiene I und II übereinander angeordnet. Den Figuren 1 und 2 kann entnommen werden, dass die Phasenleiter gleichzeitig symmetrisch zu einer in Abspannrichtung der Sammelschienen I, II ausgerichteten vertikalen Ebene E angeordnet sind. Zwischen den beiden Sammelschienen ist ein die Phasenleiter mechanisch stabilisierendes Seilwerk vorgesehen. Diese Seilwerk enthält zum einen eine in der vertikalen Ebene geführte und auf Erdpotential gelegte Seilverspannung mit zwei vertikal ausgerichteten Spannseilen 9 (Fig.2), welche jeweils von Kopfteilen der Portale 1 und 2 auf Erde geführt sind, sowie weitgehend horizontal erstreckte Führungsseile 10_{R} (Fig.1), 10_{S}, 10_{T} (Fig.2). Zum anderen enthält das Seilwerk auch quer zur Ebene E verlaufende Halteseile 11_{R}, 11_{S} und 11_{T}. (Figuren 1 und 2).

Je eines der Führungsseile 10_{R}, 10_{S}, 10_{T}, beispielsweise 10_{R}, ist jeweils zwei Phasenleitern gleicher Phase der Sammelschienen I und II, beispielsweise I_{R} und II_{R}, zugeordnet. Die Führungsseile sind in Höhe der zugeordneten Phasenleiter an den beiden Spannseilen 9 abgespannt und sind daher aus Fig.3 nicht ersichtlich. In Abwandlung dieser Zuordnung können jedoch diesen Führungsseilen auch zwei Phasenleiter verschiedener Phase zugeordnet sein. Hierbei wird jedoch an die die Geräte 8 verknüpfende Leittechnik der Anlage höhere Anforderungen gestellt als bei phasengleicher Leiteranordnung.

Jedes Halteseil 11_{R}, 11_{S}, 11_{T} ist mit einem seiner beiden Enden elektrisch leitend mit einem Phasenleiter der Sammelschiene verbunden, z.B. das Halteseil 11_{R} mit dem Phasenleiter II_{R} (Fig.2). Das andere Ende jedes Halteseils ist gegenüber dem zugeordneten Phasenleiter elektrisch isoliert an einem Führungsseil der geerdeten Seilverspannung abgespannt. Beim Halteseil 11_{R} ist dies das Führungsseil 10_{R}. Der Abspannpunkt 12 (Fig.1) jedes Halteseils auf dem Führungsseil ist zugleich Abspannpunkt für ein Halteseil zu einem Phasenleiter der anderen Sammelschiene, z.B. dem Phasenleiter I_{R}.

Jedes Halteseil, z.B. 11_{R}, weist einen mit dem Phasenleiter, z.B. II_{R}, elektrisch leitend verbundenen Abschnitt 13 einer der Stromverbindungen 7 zu den Komponenten der Schaltanlage auf sowie ein isolierend ausgebildetes, flexibles Abspannelement 14, welches vorzugsweise als Isolator-Kette ausgeführt ist (Figuren 1 und 2).

Mit dem Seilwerk werden Seilschwingungen der Phasenleiter weitgehend unterdrückt, so dass sich die Doppelsammelschienen-Anordnung durch grosse mechanische Stabiltät auszeichnet. Zugleich werden Teile dieses Seilwerks in kostensparender Weise als Abschnitte für sowie benötigte Stromverbindungen 7 zu den Schalt-, Schutz- und Messgeräten 8 der Schaltfelder A, B und C verwendet. Darüber hinaus wird durch die auf Erdpotential geführte und überwiegend in der Ebene E angeordnete Seilverspannung mit den vertikalen Spannseilen 9 und den horizontalen Halteseilen 10_{R}, 10_{S}, 10_{T} eine wirksame Erdungsfläche zwischen den beiden Sammelschienen I und II gebildet. Durch den Einbau von beispielsweise als Tellerfederpaket ausgebildeten Dämpfungselementen 15 (Fig.2) in die Spannseile 9 wird die vom Seilwerk aufgenommenen Schwingungsenergie nun nicht nur in den Portalen 1 und 2 sondern zusätzlich auch in den Dämpfungselementen 15 absorbiert.

Da die Phasenleiter übereinander angeordnet sind, beansprucht die Doppelsammelschienen-Anordnung 4 verhältnismässig wenig Platz. Dieser geringe Platz kann zudem benutzt werden, um im Sammelschienenraum gekapselte und gasisoliert ausgeführte Komponenenten 8 der Schaltfelder A, B und C mit Trenner-, Leistungsschalter- und/oder Messwandlerfunktion aufzustellen und über die Stromverbindungen 7 an die Phasenleiter der Sammelschienen anzuschliessen.

Der sonst ausserhalb des Sammelschienenraums für Freiluftkomponenten der Schaltfelder A, B, C benötigte Platz wird so zusätzlich eingespart.

Die Phasenleiter jeder der Sammelschienen I und II können grundsätzlich vertikal übereinander liegend angeordnet sein. Aus Fig. 2 ist jedoch ersichtlich, dass die Phasenleiter nach Art eines Daches übereinander angeordnet sind. Hierdurch wird eine besonders homogene Verteilung des elektrischen Feldes in der Doppelsammelschienen-Anordnung erreicht, wodurch die Anlage besonders wirksam gegen Blitzschlag geschützt ist und Verluste durch Koronaentladungen stark reduziert werden.

Wie aus Fig.2 ersichtlich ist, weist das Portal 1 einen annähernd als regelmässiges Sechseck ausgeführten Abspannrahmen auf. Die unteren zwei Ecken dieses Rahmens sind auf einem geerdeten Fundament befestigt. Die in der Rahmenmitte gelegenen zwei Ecken sind gegenüber den unteren und oberen beiden Ecken nach aussen geführt. Die Phasenleiter sind an schräg nach oben geführten Rahmenabschnitten befestigt, die die mittleren und oberen Ecken verbinden. Hierdurch wird zum einen die dachartige Anordnung der Phasenleiter erreicht, zum anderen kann das Portal 1 dadurch aber in besonders günstiger Weise Querkräfte aufnehmen, die über das Spannseil 9 und die Führungsseile 10_{R}, 10_{S}, 10_{T} am Portal 1 wirken. Ferner wird durch diese Ausbildung des Portals erreicht, dass im Betrieb der Doppelsammelschienen-Anordnung vom Seilwerk eingeleitete Schwingungsvorgänge sicher aufgenommen und an das Fundament weitergegeben werden. An den beiden oberen Ecken des Portals sind zugleich zwei in Abspannrichtung der Sammelschienen geführte Blitzschutzseile 16 angebracht.

Eine für die meisten Anwendungen ausreichend hohe mechanische Festigkeit bei kleinem Materialaufwand weist die Doppelsammelschienen-Anordnung bereits dann auf, wenn die Portale 1 und 2 statt eines sechseckig einen bogenförmig gekrümmt oder fünfeckig ausgeführten Rahmen aufweisen.

### BEZEICHNUNGSLISTE

- 1, 2, 3: Portale
- 4: Doppelsammelschienen-Anordnung
- 5: Isolator-Ketten
- 6, 7: Seilverbindungen, Stromverbindungen
- 8: Schalt-, Schutz- und Messgeräte
- 9: Spannseile
- 10_{R}, 10_{S}, 10_{T}: Führungsseile
- 11_{R}, 11_{S}, 11_{T}: Halteseile
- 12: Abspannpunkt
- 13: Abschnitt von Stromverbindung 7
- 14: isolierendes Abspannelement
- 15: Dämpfungselement
- 16: Blitzschutzseile
- I, II: Sammelschienen
- E: vertikale Ebene
- A, B, C: Schaltfelder

## Patentansprüche

1. Doppelsammelschienen-Anordnung (4) einer Schaltanlage in Freiluftausführung mit zwei mehrphasigen Sammelschienen (I, II), mit zwei Portalen (1, 2), an denen die Phasenleiter (I_{R}, I_{S}, I_{T}, II_{R}, II_{S}, II_{T}) der beiden Sammelschienen (I, II) abgespannt sind, und mit Stromverbindungen (7) von den Phasenleitern zu Schaltfeldern (A, B, C) der Schaltanlage, **dadurch gekennzeichnet, dass** die Phasenleiter übereinander und symmetrisch zu einer in Abspannrichtung ausgerichteten vertikalen Ebene (E) angeordnet sind, und dass zwischen den beiden Sammelschienen (I, II) ein die Phasenleiter mechanisch stabilisierendes und Abschnitte der Stromverbindungen (7) enthaltendes Seilwerk vorgesehen ist.

2. Anordnung nach Anspruch 1, **dadurch gekennzeichnet, dass** das Seilwerk eine überwiegend in der vertikalen Ebene (E) geführte und auf Erdpotential gelegte Seilverspannung enthält sowie quer zur Ebene verlaufende Halteseile (11_{R}, 11_{S}, 11_{T}), welche jeweils mit einem ihrer beiden Enden elektrisch leitend mit einem der Phasenleiter (I_{R}, I_{S}, I_{T}, II_{R}, II_{S}, II_{T}) verbunden sind, und mit ihrem anderen Ende gegenüber dem Phasenleiter elektrisch isoliert an der geerdeten Seilverspannung befestigt sind.

3. Anordnung nach Anspruch 2, **dadurch gekennzeichnet, dass** die geerdete Seilverspannung mindestens zwei überwiegend vertikal ausgerichtete und von Kopfteilen der Portale (1, 2) auf Erde geführte Spannseile (9) aufweist sowie mehrere der Anzahl der Phasen entsprechende und überwiegend horizontal verlaufende Führungsseile (10_{R}, 10_{S}, 10_{T}), deren Enden an den beiden vertikalen Spannseilen (9) befestigt sind und an denen jeweils mit Phasenleitern verbundene Halteseile (11_{R}, 11_{S}, 11_{T}) abgespannt sind.

4. Anordnung nach Anspruch 3, **dadurch gekennzeichnet, dass** in die beiden Spannseile (9) jeweils ein Dämpfungselement (15) eingebaut ist.

5. Anordnung nach einem der Ansprüche 1 bis 4, **dadurch gekennzeichnet, dass** die Phasenleiter (I_{R}, I_{S}, I_{T}, II_{R}, II_{S}, II_{T}) dachartig übereinander angeordnet sind.

6. Anordnung nach Anspruch 5, **dadurch gekennzeichnet, dass** eines der beiden Portale als ein mindestens sechs Ecken aufweisender Rahmen ausgeführt ist.
